(19) Europäisches Patentamt
European Patent Office
Office européen des brevets

(11) Publication number: 0 056 700
A2

# (12) EUROPEAN PATENT APPLICATION

(21) Application number: 82300141.7

(22) Date of filing: 12.01.82

(51) Int. Cl.$^3$: C 04 B 13/22

(30) Priority: 16.01.81 GB 8101307

(43) Date of publication of application: 28.07.82 Bulletin 82/30

(84) Designated Contracting States: AT BE DE FR IT NL SE

(71) Applicant: International Standard Electric Corporation
320 Park Avenue
New York New York 10022(US)

(72) Inventor: Drake, Cyril Francis
1 Church Cottages Peldon Road
Harlow Essex(GB)

(74) Representative: Dennis, Mark Charles et al,
ITT-UK Patent Department Maidstone Road
Foots Cray Sidcup DA14 5HT(GB)

## (54) Improvements in hydraulic cements.

(57) Alkaline residues in a hydraulic cement are neutralised by incorporating in the cement an acid material having a dissolution rate sufficiently slow that the setting process is not adversely affected. Typically the neutralising agent comprises an alkali metal/phosphorus pentoxide glass which is incorporated in the cement prior to or after mixing with water. The pH of the glass is adjusted by controlling its phosphorus pentoxide content, and the dissolution rate is determined by including e.g. calcium oxide and/or alumina to the glass composition.

EP 0 056 700 A2

## IMPROVEMENTS IN HYDRAULIC CEMENTS

This invention relates to hydraulic cements and in particular to methods of and compositions for neutralising alkaline residues in such cements after setting has taken place.

Hydraulic cements, for example Portland cement, typically comprise a complex mixture of calcium silicates and calcium aluminates. On the addition of water the calcium aluminates are first hydrated and then the calcium silicates take up water. During this process free lime is separated in the form of calcium hydroxide thus rendering the composition strongly alkaline. Some alkalinity remains in the cement for a considerable period after setting has taken place.

The deleterious consequences of this residual alkalinity include the growth of unsightly excrescences on the cement surface as the residues and leached out, e.g. by rain water, and, more importantly, the accelerated corrosion of steel either contained in the cement as a reinforcement or in direct contact with the cement.

It might be thought that the solution to this problem could be to add an acid material to the cement prior to or at the same time as the addition of water to effect setting. The addition of an acid at the setting stage however seriously interferes with the setting process and results in a severely weakened structure.

The object of the invention is to minimise or to overcome these disadvantages.

According to one aspect of the invention there is provided a neutralising agent for a hydraulic cement, said agent comprising a water soluble composition which on dissolution releases an acid substance, characterised in that the dissolution rate of the composition is such that the neutralising process takes place primarily after setting of the cement has taken place.

According to another aspect of the invention there is provided a method of neutralising alkaline residues in a hydraulic cement, the method including releasing an acid substance into the cement after setting has taken place.

According to a further aspect of the invention there is provided a method of neutralising alkaline residues in a hydraulic cement, the method including dispersing in the composition a powdered or granular water soluble composition which on dissolution releases an acid substance, characterised in that the dissolution rate of the composition is such that the neutralising process takes place primarily after setting of the cement has taken place.

We have found that certain water soluble glasses can be employed to release a neutralising acid substance at a predetermined controlled rate over an extended period. As the release rate of the acid substance is slow (and controlled by the glass composition) insufficient acid is released during the setting period to have any substantial effect on the setting reactions. After setting has taken place the glass continues to dissolve and thus slowly neutralises the alkaline residues in the cement. Thus the composition overcomes the disadvantages of prior art materials in that the neutralising agents are released after setting of the cement has taken place. The setting characteristics of the cement are therefore not deleteriously affected.

The term cement is used herein in its broadest sense and is understood to include solid structures formed from cement powders and sand and also from cement powders and gravel, the latter being commonly known as concretes.

Embodiments of the invention will now be described with reference to the accompanying drawings in which:

Fig. 1 illustrates the relationship between composition and pH of a typical alkali metal phosphate glass;

Fig. 2 illustrates the relationship between composition and dissolution rate of the glass of Fig. 1;

and Fig. 3 illustrates the effect on dissolution rate of the addition of alumina to the glass of Fig. 1 and Fig. 2.

We have found that if release of an acid substance into a hydraulic cement is delayed until setting has been substantially completed a sufficient quantity of acid to neutralise the alkaline residues can be released without having any substantial effect on the strength of the finished structure. There are a variety of methods whereby this delayed release can be effected, but we prefer to employ water soluble glass compositions for this purpose. Such compositions can be designed to have a predetermined dissolution rate and provide a predetermined solution pH by controlling the proportions of their constituent materials.

It will be apparent to those skilled in the art that by suitable adjustment of composition a glass having a desired dissolution rate and resulting solution pH can be formed. Such techniques are described in our published specification No. 1,512,637 (C.F. Drake-49) and our co-pending application No. 7930041 (C.F. Drake-70).

An acid glass may be based on phosphorus pentoxide, a typical composition/pH relationship being shown in Fig. 1 of the accompanying drawings. The glass is a sodium oxide/phosphorus pentoxide glass and, as can be seen, the solution pH can be adjusted between 3.5 and 2.65 by adjusting the phosphorus pentoxide content between 53 and 72 mole %. The desired solution pH of the glass will depend on the nature of the cement system in which the glass is to be employed. This particular glass system is of course given only as an example and the techniques described herein are in no way limited to this glass system. It will also be clear to those skilled in the art that although the glass constituents are for convenience defined as oxides the glass itself does not necessarily contain the free oxides.

Having determined the pH of the glass the next stage is to provide a composition of suitable dissolution rate. This may be achieved by the addition of a quantity of e.g. calcium oxide (CaO) to the sodium oxide/phosphorus pentoxide glass, the effect of such addition being illustrated in Fig. 2. It can be seen for example that a molar proportion of calcium oxide in the range 10 to 25 provides a range of dissolution rates over 2½ orders of magnitude.

A further and larger effect on the dissolution rate can be provided by the incorporation of a minor proportion, typically between 0.1 and 5 mole percent, of alumina ($Al_2O_3$) in the glass, this effect being illustrated in Fig. 3. It will be appreciated that a consideration of the techniques indicated in Figs. 2 and 3 can produce a very wide range of glass dissolution rates. Other glass modifying oxides may also be employed for dissolution rate control.

The glass or other controlled release material can be incorporated into the dry or wet cement in the form of a powder, or into the wet cement as granules forming part of a ballast material. Alternatively, when only the prevention of surface excrescence is required the acid material can be incorporated in a surface layer that is applied as a slip.

Where a slip coating containing a soluble glass is employed it is also possible to incorporate a biocidal material, e.g. cupric oxide, in the glass to prevent algal growth on the cement surface.

In some applications the particulate acid material may be provided with a relatively low dissolution rate coating. This coating slowly dissolves during setting of the cement but does finally dissolve to release the higher dissolution rate acid material after a sufficient period of time has elapsed for setting to be substantially complete.

We have found that neutralisation of alkaline residues in a cement structure substantially reduces the corrosive effect of the cement or a reinforcing steel support embedded therein. This reduction of corrosion can be enhanced by formulating a glass composition, for example a zinc oxide/phosphorus pentoxide glass, that has both acidic and corrosion inhibiting properties. Further protection of the steel may be provided by applying a corrosion inhibiting glass to the steel surface e.g. in our co-pending application Nos. 23790/77 (C.F. Drake-58), 8036718 (C.F. Drake-A. Maries-P.F. Bateson 73-2-1) and 8011297 (A. Maries-P.F. Bateson 3-2). Enhanced protection may be provided by first coating the steel surface with a copper flash as described in our co-pending application No. 8101306 (C.F. Drake-76).

It will be clear to those skilled in the art that the techniques described herein are not limited to glass compositions. However we prefer to employ glasses for this purpose as their non-stoichiometric nature permits the preparation of materials over wide and continuously variable ranges of dissolution rates and pH values.

CLAIMS:-

1. A method of neutralising alkaline residues in a hydraulic cement, the method including releasing an acid substance into the cement after setting has taken place.

2. A method of neutralising alkaline residues in a hydraulic cement, the method including dispersing in the composition a powdered or grannular water soluble composition which on dissolution releases an acid substance, characterised in that the dissolution rate of the composition is such that the neutralising process takes place primarily after setting of the cement has taken place.

3. A method as claimed in claim 2, characterised in that the composition is incorporated in a cement surface coating slip.

4. A method as claimed in claim 2, characterised in that the composition is incorporated in the form of a surface coating applied to a steel reinforcement embedded in the cement.

5. A method as claimed in any one of claims 1 to 4, characterised in that said composition is a water soluble glass.

6. A hydraulic cement structure treated by a method as claimed in any one of claims 1 to 5.

7. A neutralising agent for a hydraulic cement, said agent comprising a particulate water soluble composition which on dissolution releases an acid substance, characterised in that the dissolution rate of the composition is such that the neutralising process takes place primarily after setting of the cement has taken place.

8. A neutralising agent as claimed in claim 7 and which comprises an alkali metal/phosphorus pentoxide glass.

9. A neutralising agent as claimed in claim 8, characterised in that said glass includes calcium oxide and/or alumina.

10. A neutralising agent as claimed in claim 7, 8 or 9, characterised in that it provides a solution pH of 2.65 to 3.5 on dissolution.

11. A neutralising agent as claimed in any one of claims 7 to 10, characterised in that said glass incorporates one or more materials having corrosion inhibiting or biocidal properties.

12. A neutralising agent as claimed in claim 11, characterised in that said glass includes cupric oxide.

13. A neutralising agent as claimed in any one of claims 7 to 12, characterised in that said glass particles are coated with a material having a relatively low dissolution rate.

14. A dry pack mix comprising a hydraulic cement powder and a neutralising agent as claimed in any one of claims 7 to 13.

15. A cement structure prepared for a dry pack mix as claimed in claim 14.

FIG.1

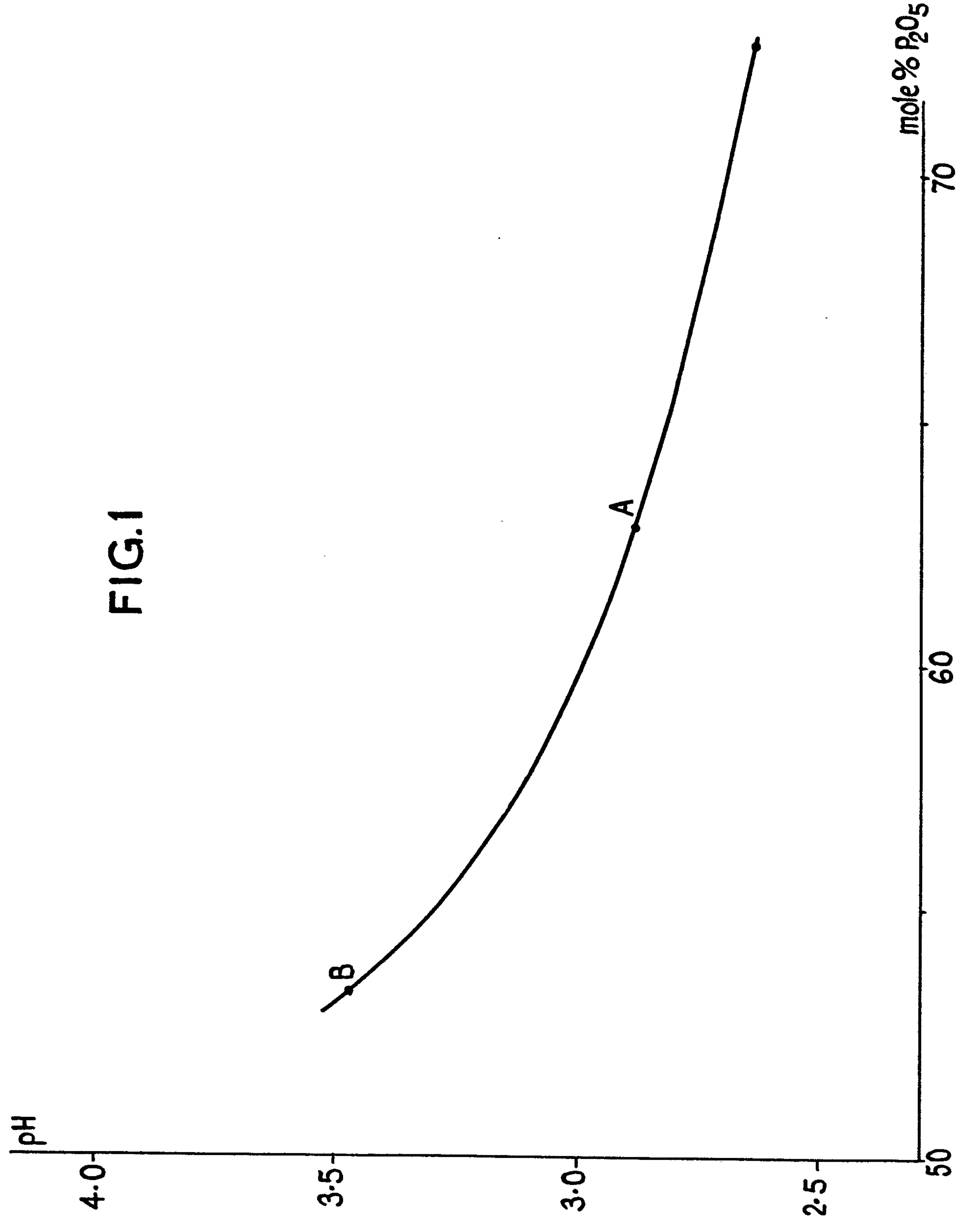

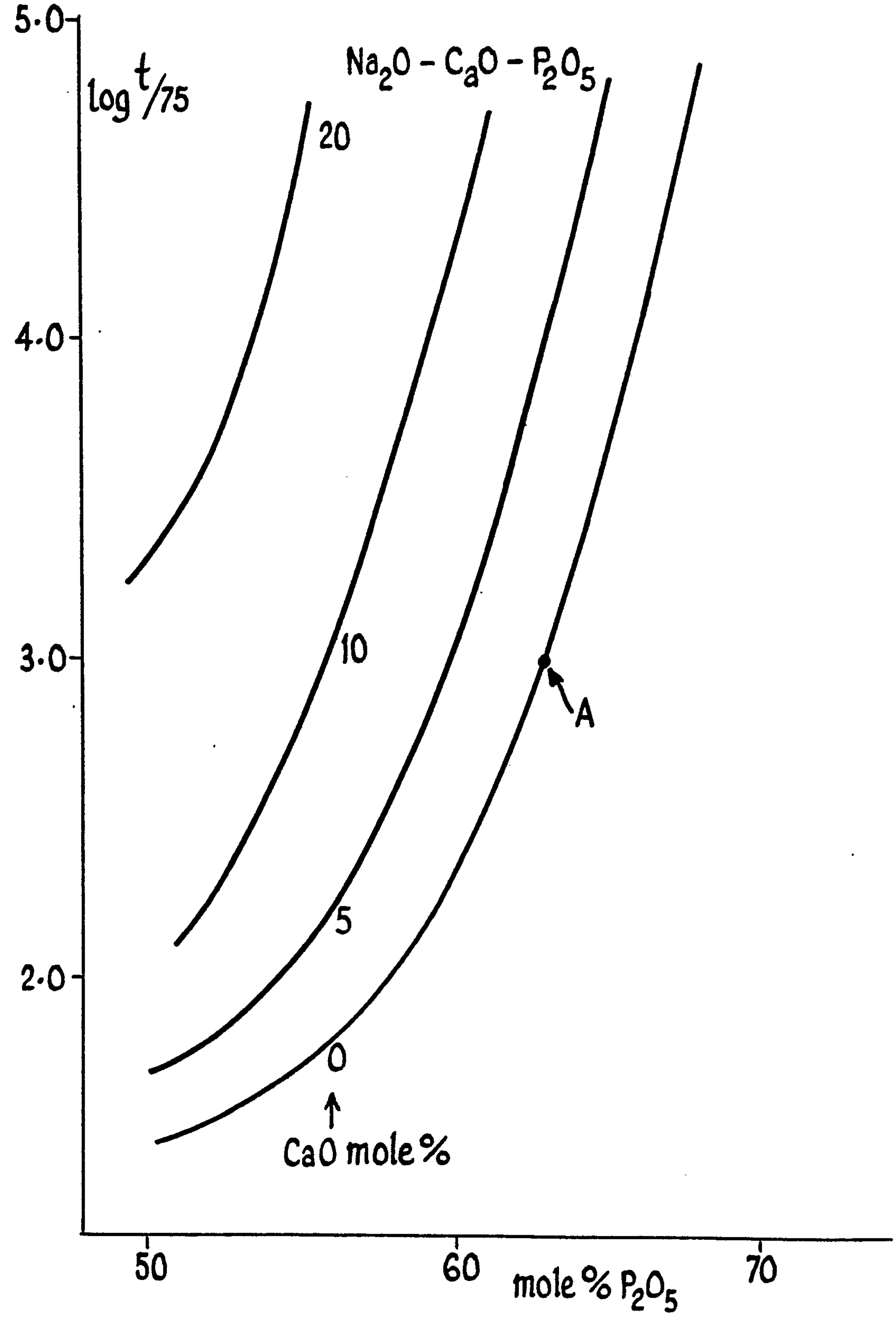
5·0
4·0
3·0
2·0
log t/75
$Na_2O - CaO - P_2O_5$
20
10
5
0
A
CaO mole%
50
60
70
mole % $P_2O_5$

FIG. 2

FIG. 3

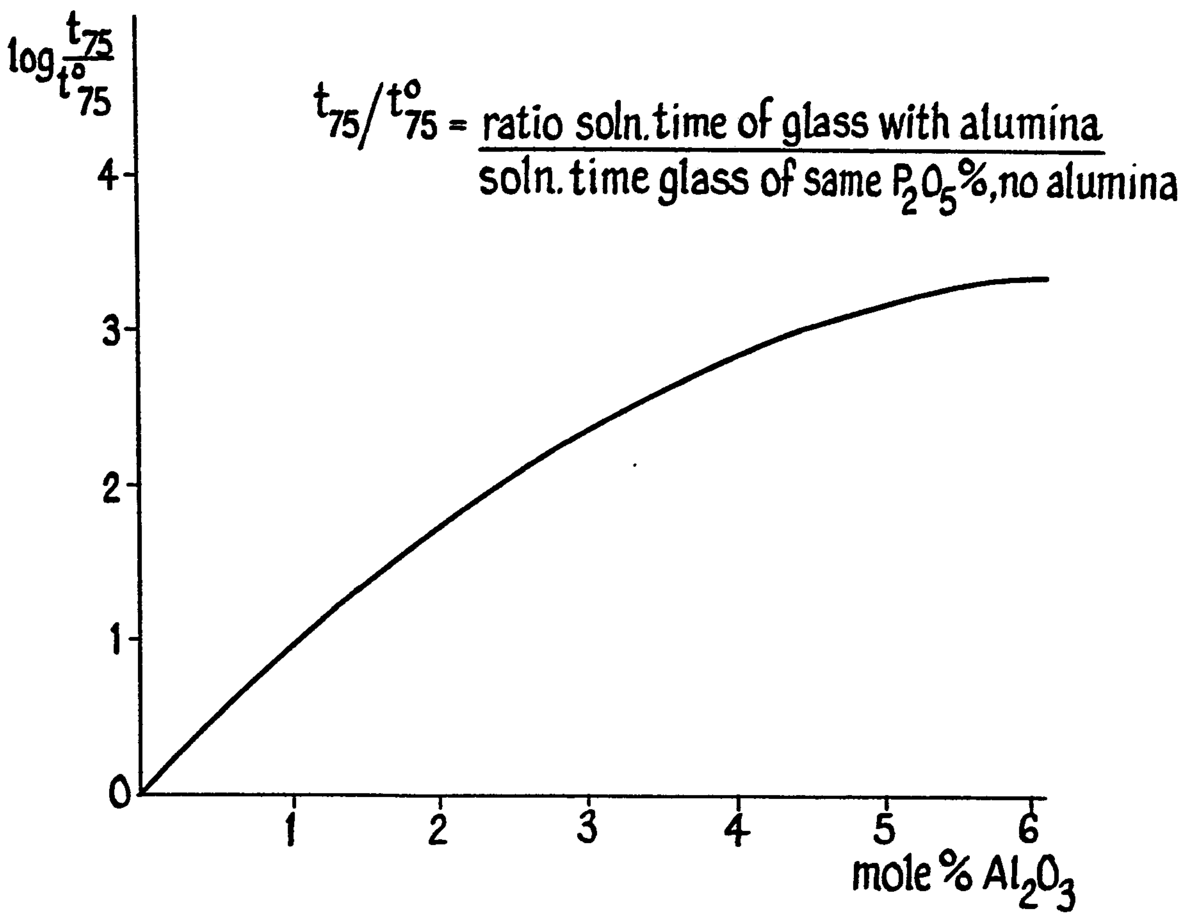
$\log \frac{t_{75}}{t^{o}_{75}}$
$t_{75}/t^{o}_{75}$ = ratio soln. time of glass with alumina / soln. time glass of same $P_2O_5$%, no alumina
4
3
2
1
0
1
2
3
4
5
6
mole % $Al_2O_3$